# EUROPÄISCHE PATENTSCHRIFT

(11) **EP 3 140 360 B1**
(45) Veröffentlichungstag und Bekanntmachung des Hinweises auf die Patenterteilung: **06.07.2022**
(21) Anmeldenummer: 15721226.7
(22) Anmeldetag: 07.05.2015
(51) Int. Cl.: C09D 133/08, C09D 133/10, C09D 167/06, C09J 133/08, C09J 133/10, C09J 167/06

(54) **DIREKT HAFTENDES, HALOGENFREIES, SCHNELL TROCKNENDES HEISSSIEGELBINDEMITTEL ZUR VERSIEGELUNG VON POLYESTERFOLIEN GEGEN POLYSTYROL, POLYESTER ODER PVC**
DIRECTLY ATTACHING, HALOGEN-FREE, FAST-DRYING, HEAT-SEALING BINDER FOR SEALING POLYESTER FILMS TO POLYSTYRENE, POLYESTER OR PVC
LIANT DE THERMOSOUDAGE À ADHÉRENCE DIRECTE, À SÉCHAGE RAPIDE ET SANS HALOGÈNE POUR LE SCELLEMENT DE FILMS DE POLYESTER À DU POLYSTYRÈNE, DU POLYESTER OU DU PVC

(30) Priorität: 08.05.2014 DE 102014208608
(43) Veröffentlichungstag der Anmeldung: 15.03.2017
(73) Patentinhaber: Evonik Operations GmbH, 45128 Essen (DE)
(72) Erfinder: HENNIG, André, 55218 Ingelheim (DE); ARNOLD, Thomas, 63571 Gelnhausen (DE); WICKE, Michael, 64342 Seeheim-Jugenheim (DE); HARTMANN, Jürgen, 64295 Darmstadt (DE); KELLER, Bruno, 55263 Wackernheim (DE); SCHMITT, Günter, 64291 Darmstadt (DE); WALDHAUS, Michael, 64354 Reinheim (DE)
(74) Vertreter: Evonik Patent Association
(86) Internationale Anmeldenummer: PCT/EP2015/060057
(87) Internationale Veröffentlichungsnummer: WO 2015/169897

(56) Entgegenhaltungen:
- WO-A1-2006/134042
- DE-A1-102006 009 511
- DE-A1-102006 009 586

## Beschreibung

### Gebiet der Erfindung

Die vorliegende Erfindung umfasst ein einkomponentiges Bindemittel für Heißsiegelanwendungen, welches für die Versiegelung von Polyesterfolien, insbesondere von Polyethylenterephthalat-Folien (PET-Folien), gegen Polystyrol-, PVC- und Polyester-Behälter eingesetzt werden kann. Bei diesen Polyestern kann es sich insbesondere um Polyethylenterephthalat (PET) oder um Polymilchsäure (PLA) handeln. Dabei zeichnen sich die Bindemittel neben einer guten Siegelnahtfestigkeiten besonders durch eine gute Transparenz sowie hervorragende Applikationseigenschaft aus. Ein wesentlicher Aspekt der Erfindung ist, dass die Versiegelung ohne Zugabe von Haftvermittlern, besonders ohne die Zugabe von Haftvermittlern auf Polyvinylchloridbasis (PVC) oder auf Polyesterbasis, erfolgen kann, und dass trotzdem gegenüber PS- und PET-Behältern zumindest vergleichbare, teilweise verbesserte Barriere- und Siegeleigenschaften erreicht werden als mit bereits im Markt erhältlichen Heißsiegelsystemen. Gleichzeitig ist die Forderung erfüllt sein, dass sich die Deckelfolie leicht wieder vom Becher abziehen lässt ("smooth peel"). Weiterhin umfasst die vorliegende Erfindung ein geeignetes, effizientes Verfahren zur Herstellung von einkomponentigen Bindemitteln für Heißsiegelanwendungen, welche für die Versiegelung von z.B. PET-Folien gegen PS Behälter eingesetzt werden kann.

### Stand der Technik

Zum Verschließen von Kunststoffgefäßen werden in der Lebensmitteltechnologie, insbesondere bei Molkereiprodukten wie Joghurtbechern, neben den etablierten Aluminiumdeckeln überwiegend Deckel aus einem Polyester, insbesondere aus Polymilchsäure (PLA) oder amorphen Polyethylenterephthalat (A-PET) verwendet. Diese Deckel werden zum Verschließen und gleichzeitig zur Aromabarriere des Lebensmittels gegenüber dem Folienmaterial mit einem Siegellack beschichtet verwendet.

Dabei besteht schon sehr lange das Bedürfnis im Markt, transparente A-PET-Folien zu versiegeln. Mit solchen Deckelmaterialien sind neue Erscheinungsbilder der Verpackungen von Lebensmitteln verfügbar. Bei Verwendung von Heißsiegellacken des Standes der Technik ist eine solche Verpackung, mit gleichzeitig sehr guten Siegelnahtfestigkeiten, jedoch noch nicht möglich, da beschriebene Heißsiegelbeschichtungen eine zu geringe Transparenz für solche Anwendungen aufweisen.

Üblicherweise werden PET-Folien mittels Polyvinylacetat bzw. Polyethylen/Polyvinylacetat oder Polyester-Lacken gesiegelt. Diese Systeme weisen jedoch keine optimalen Heißsiegelnahtfestigkeiten auf und sind nicht transparent.

In der DE-A 35 31 036 werden durch Koextrusion herstellbare Kunststoff-Folien beschrieben, die aus einer siegelfähigen Schicht aus schlagzähem Polystyrol, einem Block-Copolymerisat und einem Gleitmittel bestehen. Auch dieses System ist nicht transparent darstellbar, auch wenn das eigentliche A-PET durchaus eine hohe Transparenz aufweist. Darüber hinaus sind coextrudierte Folien bekanntermaßen bezüglich der zu erreichenden Siegelnahtfestigkeiten gegenüber beschichteten Systemen, bei denen der Lack während des Trocknens eine gewünschte Mikrophasenseperation eingehen kann, in Bezug auf eine geringere Siegelnahtfestigkeit weniger bevorzugt.

In der EP-A 0 406 681 wird aber zu Recht auf die Problematik bei Verwendung von heißsiegelfähigen Kunststoff-Folien anstelle von Aluminiumfolie hingewiesen. Einschränkend bemerkbar macht sich im Regelfall die wesentlich engere Verarbeitungsbreite. Überwiegend ergibt sich ein sehr enger Verarbeitungsbereich von 10 °C bis 20 °C, der ziemlich konstant eingehalten werden muss, um eine störungsfreie Produktion und einen einwandfreien Gebrauch der versiegelten Packung zu garantieren. Bei Abfüllanlagen mit mehreren Kavitäten zum gleichzeitigen Abfüllen von Bechern ist diese Voraussetzung nicht immer erfüllt. Die EP 0 406 681 hatte sich zur Aufgabe gesetzt, die nach dem Koextrusionsverfahren gemäß DE 35 31 036 herstellbaren Folien auf Polystyrolbasis u.a. so zu verbessern, dass die Verarbeitungsbreite und die Verarbeitungssicherheit vergrößert werden. Ferner sollte eine einwandfreie Produktion auch auf Abfüllanlagen mit mehreren Abfüllkavitäten sichergestellt werden. In der Praxis läuft dies auf die Anwendung höherer Siegeltemperaturen mit entsprechenden Anforderungen an die Qualität der Kunststoff-Folien hinaus. Nach der EP 0 406 681 wurden diese Anforderungen erfüllt durch eine nach dem Koextrusionsverfahren oder durch Kaschieren hergestellte siegelfähige Kunststoff-Folie aus zwei Schichten A und C und gegebenenfalls einer Schicht B sowie gegebenenfalls je einer Schicht eines Haftvermittlers D zur Verbindung von jeweils zweien der Schichten A, gegebenenfalls B und C, bestehend aus 1% bis 50% einer Schicht aus einem heißsiegelfähigen, schlagzähen Polystyrol A, bis zu 95% einer Trägerschicht B und 1% bis 99% einer hochschmelzenden Kunststoffschicht C, wobei die Summe der Stärken oder des Gewichts von A und gegebenenfalls B und C jeweils 100 ist. Solche Systeme sind jedoch nur sehr aufwendig zu realisieren und auch nicht transparent.

EP 1 891 174 und EP 1 989 258 beschreiben wiederum Heißsiegeldispersionen, die sich aus mindestens einem Polyolefin, einem Polymethacrylat, einem Polyester und einem Polyolefin-graft-Polymethacrylat Copolymer zusammensetzen. Dabei enthält die Dispersion gemäß EP 1 891 258 zusätzlich ein Poylester-graft-Polymethacrylat Copolymer. Der Polyolefinanteil beträgt dabei jedoch jeweils mindestens 10 Gew% am Feststoffgehalt der Dispersionen. So ist es zwar auch möglich sowohl Aluminiumfolien, als auch PET-Folien gegenüber Polypropylen (PP) als Bechermaterial zu versiegeln, allerdings weisen die Beschichtungen nahezu keine Transparenz auf und sind aufwendig und damit teuer herzustellen. Dies steht einem breiten Einsatz entgegen.

In EP 2 495 282 ist wiederum eine Heißsiegeldispersion zum Verschließen von PET-Folien gegenüber Polystyrol-Bechern beschrieben. Diese Dispersion weist ausschließlich Polyester, Poly(meth)acrylate und Poylester-graft-Polymethacrylat Copolymere auf. Jedoch hat sich gezeigt, dass diese Dispersionen eine nur verminderte Lagerstabilität aufweisen und die zu erzielenden Heißsiegelnahtfestigkeiten nicht ausreichend sind.

### Aufgabe

Aufgabe der vorliegenden Erfindung war es durch Entwicklung und Formulierung geeigneter Polymere Heißsiegellacke zu ermöglichen, die dazu geeignet sind, PET-Folien bzw. PET-beschichtete Folien gegen unterschiedliche Bechermaterialien, insbesondere gegen Polystyrol, Polyester oder PVC, zu versiegeln. Bei den Polyestern der Polyesterfolie handelt es sich insbesondere um Papier-Polyethylenterepthalat-Verbundmaterialien, einseitig mit Aluminium beschichtete PET-Folien (AluPET) sowie Folien aus amorphen Polyethylenterephthalat (A-PET).

Insbesondere war es Aufgabe der vorliegenden Erfindung, dass die Beschichtung mit dem Heißsiegellack auf dem Bechermaterial gegenüber dem Stand der Technik eine deutlich verbesserte Transparenz, bei gleichzeitig hohen Siegelnahtfestigkeiten und einem gelichmäßigen Abzugsverhalten beim Öffnen ("smooth peel") aufweist.

Es bestand darüber hinaus die Aufgabe, dass bei den üblichen Taktzeiten, die bei der Heißsiegelung von Kunststofffolien angewandt werden, ausreichend hohe Festigkeiten des Verschlusses erreicht werden.

Eine weitere Aufgabe war es, ein Heißsiegellackbindemittel zu entwickeln, das gegenüber dem Stand der Technik einfacher und mit weniger Komponenten darstellbar ist.

Es bestand darüber hinaus die Aufgabe, hohe Haftfestigkeit bereits bei relativ hohen Temperaturen direkt nach der Versiegelung zu erreichen, (hohe Wärmestandfestigkeit), da so kurze Zykluszeiten beim Versiegeln der Folie und beim Lebensmittelverpacker erreicht werden.

Weitere nicht explizit genannte Aufgaben ergeben sich aus dem Gesamtzusammenhang der nachfolgenden Beschreibung, Ansprüche und Beispiele.

### Lösung

Die Aufgaben werden gelöst durch ein heißsiegelfähiges, zur Versiegelung verschiedenartiger Untergründe geeignetes Beschichtungssystem, enthaltend eine filmbildende Dispersion, dadurch gekennzeichnet, dass diese Dispersion zwischen 10 und 60 Gew%, bevorzugt zwischen 25 und 45 Gew% eines
Polyesters oder ein Polyestergemischs als Polymertyp A, zwischen 10 und 60 Gew%, bevorzugt zwischen 20 und 45 Gew% eines Poly(meth)acrylats als Polymertyp B,
zwischen 1 und 20 Gew%, bevorzugt zwischen 5 und 15 Gew% eines Pfropfcopolymers aus Polymertyp A und Polymertyp B als Polymertyp AB, zwischen 1 und 30 Gew%, bevorzugt zwischen 5 und 25 Gew% eines Polyolefins als Polymertyp C und
zwischen 1 und 35 Gew%, bevorzugt zwischen 5 und 25 Gew% eines Pforpfcopolymers als Polymertyp CD, bestehend aus Polymertyp C und einem Poly(meth)acrylat als Polymertyp D,
jeweils bezogen auf die Gesamtmasse der Polymertypen A, B, C, AB und CD, enthält,
Weiterhin zeichnet sich das erfindungsgemäße Beschichtungssystem dadurch aus, dass der Anteil des Polymertyps C, einschließlich der Anteile in Polymertyp CD, an dieser Gesamtmasse aus Polymertypen A, B, C, AB und CD zwischen 5 und 40 Gew% beträgt, wobei es sich bei 10% bis 40% der Kohlenstoffe der Hauptkette des Polymertyps C um tertiäre Kohlenstoffatome handelt, und dass Komponente C einen Anteil an Ethylen-Wiederholungseinheiten zwischen 20 und 70 Gew % und ein gewichtsmittleres Molekulargewicht M_{w} zwischen 10 000 und 250 000 aufweist.

Darüber hinaus zeichnet sich das erfindungsgemäße Beschichtungssystem dadurch aus, dass der Feststoffgehalt der Dispersion zwischen 25 und 70 Gew% liegt. Überraschend wurde gefunden, dass bei den üblichen Taktzeiten, die bei der Heißsiegelung von Kunststofffolien angewandt werden, ausreichend hohe Festigkeiten des Verschlusses erreicht werden. Es wurde darüber hinaus eine hohe Haftfestigkeit bereits bei relativ hohen Temperaturen direkt nach der Versiegelung und damit verbunden eine hohe Wärmestandfestigkeit erreicht.

Damit können kurze Zykluszeiten beim Versiegeln erzielt werden.

Weitere Vorteile der erfindungsgemäßen Zusammensetzung sind eine gute Haftung auf verschiedenen handelsüblichen Polyesterfolien z.B. gegen PS., wie z.B. Mixpap, PET36, AluPET oder sogar auf Aluminiumfolienfolien.

Weitere Vorteile sind im Abziehverhalten beim Öffnen, wie zum Beispiel einem Smooth Peel und dem vollständigen Fehlen von Fadenzug, zu sehen. Darüber hinaus hat die erfindungsgemäße Beschichtung eine verbesserte Transparenz gegenüber bestehenden Heißsiegel-Beschichtungen, obwohl das reine Bindemittel in Substanz keine verbesserte Transparenz zeigt. Weiterhin sind die erfindungsgemäßen Zusammensetzungen über ein einfacheres Herstellverfahren verfügbar.

### Der Polymertyp A

Grundsätzlich ist die Auswahl der für die erfindungsgemäße Beschichtungszusammensetzung geeigneten Polyester des Polymertyps A für den Fachmann leicht zu treffen. Dabei ist das Spektrum der verwendbaren Polyester sehr breit. Auswahlkriterien, die der Fachmann hinzuziehen kann sind insbesondere die Löslichkeit des Polyesters in dem jeweiligen Lösungsmittel und - für Anwendungen mit Lebensmittelkontakt - die entsprechende lebensmittelrechtliche Zulassung dieser Komponente.

Als Polymertyp A können erfindungsgemäß bevorzugt einerseits Copolyester verwendet, die sich durch Itaconsäure als Monomerbaustein auszeichnen (Polyester A1). Andererseits sind erfindungsgemäß genauso bevorzugt Polyester im Einsatz, die frei von Monomeren sind, welche polymerisationsfähige Doppelbindungen enthalten, und deren zahlenmittleres Molekulargewicht (Mₙ) größer als 5000 g/mol ist (Polyester A2) und somit die Haftung zur PET-Folie hervorrufen.

In einer besonders bevorzugten Ausführungsform der vorliegenden Erfindung handelt es sich bei dem Polymertyp A um eine Mischung aus dem Polyester A1 mit einem zahlenmittleren Molekulargewicht Mₙ zwischen 700 und 5000 g/mol, bevorzugt zwischen 2000 und 4000 g/mol, der unter Copolykondensation von Itaconsäure hergestellt wurde, und dem Polyester A2 mit einem zahlenmittleren Molekulargewicht Mₙ zwischen 5000 und 50000 g/mol, bevorzugt zwischen 10000 und 35000 g/mol, der keine Doppelbindungen aufweist. Dabei enthält die Komponente des Polymertyps AB ausschließlich Polyester A1 als Polymertyp A.

Insbesondere enthält dieses bevorzugte Beschichtungssystem bezogen auf die Gesamtmasse der Polymertypen A, B, C, AB und CD, einschließlich der Anteile des Polyesters A1 in Polymertyp AB, zwischen 1 und 15 Gew%, bevorzugt zwischen 5 und 12 Gew%, ganz besonders bevorzugt zwischen 7 und 10 Gew%.des Polyesters A1 und zwischen 10 und 50 Gew%, bevorzugt zwischen 20 und 40 Gew%, ganz besonders bevorzugt zwischen 25 Gew% und 35 Gew% des Polyesters A2.

Alternativ zu dieser besonders bevorzugten Ausführungsform kann das Beschichtungssystem auch andere Polymertypen A enthalten, bei denen es sich ganz oder auch nur teilweise um einen Polyester handelt, der unter Copolykondensation von Itaconsäure hergestellt wurde und für den besonders bevorzugt die gleichen Eigenschaften gelten, wie zuvor für den Polyester A1 beschrieben.

Bevorzugt haben die Polyester A1 eine lineare oder verzweigte Struktur und sind gekennzeichnet durch eine OH-Zahlen von 20 bis 150 mg KOH/g, vorzugsweise von 25 bis 50 mg KOH/g, eine Säurezahlen von unter 10 mg KOH/g, bevorzugt unter 5 mg KOH/g und besonders bevorzugt unter 2 mg KOH/g und ein zahlenmittleres Molekulargewicht von 700 bis 5.000 g/mol, vorzugsweise von 2000 bis 4000 g/mol. Die Hydroxylzahl (OHZ) wird bestimmt nach DIN 53240-2. Die Säurezahl wird bestimmt nach DIN EN ISO 2114. Das Molekulargewicht wird bestimmt mittels Gelpermeations-chromatographie (GPC). Die Charakterisierung der Proben erfolgte in Tetrahydrofuran als Eluent nach DIN 55672-1.

Der Gehalt an Itaconsäure in den Polyestern A1 kann insbesondere im Bereich zwischen 0,1 Mol% und 20 Mol%, bevorzugt zwischen 1 Mol% und 10 Mol% und ganz besonders bevorzugt zwischen 2 Mol% und 8 Mol%, bezogen auf die Gesamtmenge an eingesetzten Polycarbonsäuren, liegen. Ansonsten ist die Art der für die erfindungsgemäßen Copolyester eingesetzten Polycarbonsäuren an sich beliebig. So können aliphatische und/oder cycloaliphatische und/oder aromatische Polycarbonsäuren enthalten sein. Unter Polycarbonsäuren sind Verbindungen zu verstehen, die bevorzugt mehr als eine und besonders bevorzugt zwei Carboxylgruppen tragen; abweichend von der allgemeinen Definition sind in besonderen Ausführungsformen auch Monocarbonsäuren darunter zu verstehen.

Beispiele für aliphatische Polycarbonsäuren mit kürzeren Ketten sind Bernsteinsäure, Glutarsäure, Adipinsäure, Azelainsäure, Sebacinsäure, Dodecandisäure, Tetradecandisäure, Octadecandisäure. Beispiele für cycloaliphatische Polycarbonsäuren sind die Isomere der Cyclohexandicarbonsäure. Beispiele für aromatische Polycarbonsäuren sind die Isomere der Benzoldicarbonsäure und Trimellitsäure. Gegebenenfalls können an Stelle der freien Polycarbonsäuren auch ihre veresterbaren Derivate wie z. B. entsprechende Niedrigalkylester oder cyclische Anhydride eingesetzt werden.

Die Art der für die erfindungsgemäßen Hydroxylpolyester eingesetzten Polyole ist an sich beliebig. So können aliphatische und/oder cycloaliphatische und/oder aromatische Polyole enthalten sein. Unter Polyolen sind Verbindungen zu verstehen, die bevorzugt mehr als eine und besonders bevorzugt zwei Hydroxylgruppen tragen; abweichend von der allgemeinen Definition sind in besonderen Ausführungsformen auch Monohydroxyverbindungen darunter zu verstehen.

Beispiele für Polyole sind Ethylenglykol, Propandiol-1,2, Propandiol-1,3, Butandiol-1,4, Pentandiol-1,5, Hexandiol-1,6, Nonandiol-1,9, Dodecandiol-1,12, Neopentylglykol, Butylethylpropandiol-1,3, Methylpropandiol-1,3, Methylpentandiole, Cyclohexandimethanole, Trimethylolpropan, Pentaerythrol und Mischungen daraus.

Unter aromatischen Polyolen sind Umsetzungsprodukte von aromatischen Polyhydroxyverbindungen wie z. B. Hydrochinon, Bisphenol A, Bisphenol F, Dihydroxynaphthalin etc. mit Epoxiden wie z. B. Ethylenoxid oder Propylenoxid zu verstehen. Als Polyole können auch Etherdiole, d. h. Oligomere bzw. Polymere, z. B. auf Basis Ethylenglykol, Propylenglykol oder Butandiol-1,4 enthalten sein. Besonders bevorzugt sind lineare aliphatische Glykole.

Neben Polyolen und Dicarbonsäuren können auch Lactone für die Synthese der Hydroxylpolyester verwendet werden.

Die erfindungsgemäßen Polyester A1 werden mittels etablierter Techniken für (Poly-)Kondensationsreaktionen hergestellt.

Die gleichsam bevorzugten Polyester A2 im Sinne der Erfindung haben insbesondere eine lineare, gegebenenfalls leicht verzweigte Struktur und sind bevorzugt gekennzeichnet durch eine OH-Zahl von 1 bis 15 mg KOH/g, vorzugsweise von 5 bis 10 mg KOH/g, eine Säurezahl von unter 10 mg KOH/g, bevorzugt unter 5 mg KOH/g und besonders bevorzugt unter 2 mg KOH/g und ein zahlenmittleres Molekulargewicht Mₙ zwischen 5.000 und 50.000 g/mol, vorzugsweise zwischen 10000 und 35000 g/mol. Weiterhin ist es besonders vorteilhaft, wenn die Polyester A2 einen Glaspunkte (T_{g}) im Bereich von 25 bis 45 °C, vorzugsweise von 30 bis 35 °C aufweisen. Der Glaspunkt wird mittels DSC (Differential Scanning Calorimetry) nach DIN EN ISO 11357-1 gemessen. Die angegebenen Werte werden einem zweiten Aufheizzyklus entnommen. Wesentlich bei den Materialien vom des Typs Polyester A2 ist, dass keine Monomere verwendet werden, welche mit (Meth)acrylaten polymerisationsfähige Doppelbindungen enthalten, also z.B. frei von Itaconsäure sind.

Ansonsten können generell zur Herstellung vom Polymertyp A Typ 2 die gleichen Monomere verwendet werden, die bei der Beschreibung des Typ 1 bereits genannt sind.

### Der Polymertypen B und D

Der Polymertyp B wird bei der Herstellung der erfindungsgemäßen Dispersion neben dem Pfropfcopolymer AB gebildet. Die Zusammensetzung der B-Ketten in dem Produktbestandteil AB entspricht ebenfalls der folgenden Beschreibung:
Polymertypund Kettensegment B bestehen definitionsgemäß aus Polyacrylat- und/oder Polymethacrylat-Sequenzen. Diese sind für sich genommen, z. B. in Form eines entsprechenden Homo- oder Copolymerisats im Lösungsmittelsystem L löslich. Das Polymerisat B ist im Allgemeinen aus Standart Methacrylaten und optional Acrylaten aufgebaut. Insbesondere ist Polymertyp B aus MMA, Butyl(meth)acrylat, Ethyl(methacrylat und/oder Propyl/meth)acrylat aufgebaut. Dabei steht die Formulierung (Meth)acrylat für Methacrylate, Acrylate oder Mischungen aus Methacrylaten und Acrylaten. Andere geeignete Monomere für den Polymertyp B können beispielsweise in EP 1 989 258 nachgelesen werden, wobei die gleichfalls dort aufgeführten funktionellen Monomere sich erfindungsgemäß auf OH-, Säure- und Silyl-Funktionalitäten beschränken.

Besonders bevorzugt besteht Polymertyp B zu mehr als 50 Gew%, vorzugsweise zu 80 Gew% bis 100 Gew% aus MMA und/oder Butylmethacrylat.

Um die Heißsiegelfestigkeit in Bezug auf besondere Materialien zusätzlich zu erhöhen können in bis zu 20 Gew%, bevorzugt bis zu 10 Gew% und besonders bevorzugt zu 0 bis 5 Gew% funktionelle Monomere einpolymerisiert sein. Bei diesen funktionellen Monomeren kann es sich z.B. um Säuren, insbesondere um Acrylsäure, Methacrylsäure oder Itaconsäure handeln. Etwas weniger bevorzugt sind Monomere mit einer OH-Gruppe, wie insbesondere 2-Hydroxyethyl(meth)acrylat oder 3-Hydroxypropyl(meth)acrylat.

Polymertyp B kann weiterhin zur Einstellung des gewünschten Molekulargewichtsbereichs Regler enthalten. Als Beispiele für schwefelhaltige Regler seien z.B MTMO, (3-Mercaptopropyl)trimethoxysilan, n-DDM (n-Dodecylmercaptan) genannt.

Im Einzelnen wird das Polymer B nach Anteil und Zusammensetzung zweckmäßigerweise im Hinblick auf die gewünschte technische Funktion gewählt werden.

Insbesondere kann Komponente B auch als Mischung verschiedener Poly(meth)acrylate vorliegen, wobei nur eine dieser verschiedenen (Meth)acrylatzusammensetzungen die Bestandteile B der Polymerkomponente AB bildet.

Analog zu Polymertyp B kann auch Polymertyp D aufgebaut sein, der als Bestandteil der Polymertypen CD, insbesondere als auf Polymertyp C gepfropfte Seitenketten vorliegt. Dabei sind die Zusammensetzungen der Komponenten B und D besonders bevorzugt identisch. Bei der Pfropfreaktion der Monomere des Polymertyps B auf Polymertyp C können weiterhin Homopolymere, also Poly(meth)acrylate, die nicht gepfropft werden, gebildet werden. Erfindungsgemäß sind diese Homopolymere Bestandteil des Polymertyps B, der - wie beschrieben - als Mischung verschiedener Poly(meth)acrylate vorliegen kann.

### Der Polymertyp C

Die erfindungsgemäß zu verwendenden Polyolefine, entsprechend Polymertyp C, sind an sich bekannt. Es handelt sich in erster Linie um EPM, hydrierte Polybutadiens oder um Copolymere aus Etyhlen, und einem α-Olefin mit 4 bis 12 Kohlenstoffatomen, insbesondere aus Ethylen und Buten oder /und Octen und/oder Hexen. Das gewichtsmittlere Molekulargewicht M_{w} liegt bei 10 000 bis 250 000, vorzugsweise zwischen 50 000 und 150 000.

Bei EPM handelt es sich um Ethylen-Propylen-Copolymere. Die Verteilung kann dabei weitgehend statistisch sein, es können aber auch mit Vorteil Sequenzpolymere mit Ethylenblöcken angewendet werden. Das Verhältnis der Monomeren Ethylen-Propylen ist dabei innerhalb gewisser Grenzen variabel, die bei etwa 95 % für Ethylen und etwa 95 % für Propylen als obere Grenze angesetzt werden können. Beispiele für geeignete EPM sind beispielsweise in den deutschen Offenlegungsschriften DE-OS 16 44 941, DE-OS 17 69 834, DE-OS 1939 037, DE-OS 19 63 039 und DE-OS 20 59 981 beschrieben. Die gleichfalls dort beschriebenen EPDM sind erfindungsgemäß deutlich weniger geeignet, da diese verstärkend auf die Trübung der Beschichtung wirken können.

Erfindungsgemäß sind Komponenten des Polymertyps C, die einen Anteil an Ethylen-Wiederholungseinheiten zwischen 20 und 70 Gew% aufweisen. Solche Wiederholungseinheiten sind nicht darauf beschränkt, dass sie durch die Copolymerisation von Ethylen direkt erhalten werden, sondern können auch durch die 1-4-Verknüpfung eines Butadiens und die anschließende Hydrierung des gebildeten Polybutadiens entstehen.

### Der Polymertyp AB

### Herstellung der Pfropfpolymerisate AB

Das erfindungsgemäße Verfahren zur Herstellung eines Pfropfcopolymerisats AB zeichnet sich dadurch aus, dass durch Reaktion eines geeigneten, weiter unten beschriebenen Initiators mit bepfropfbaren Gruppen, insbesondere mit Doppelbindungen von Itaconsäurewiederholungseinheiten im Polymer des Typs A reaktive Zentren für eine radikalische Polymerisation von (Meth)acrylaten gebildet werden. Mit reaktiven Zentren sind Polymerketten gemeint, die eine oder mehrere Initiatoreinheiten für eine radikalische Polymerisation aufweisen. Diese Initiatoreinheiten können simultan oder auch zeitlich versetzt gebildet werden. Somit können Itaconsäureeinheiten auch durchaus erst aktiviert werden, nachdem andere die an anderen Itaconsäuren gebildeten Radikale durch Abbruchreaktionen deaktiviert wurden.

Das Pfropfpolymerisat AB wird in der Regel hergestellt, indem man auf der Komponente A Monomere, die zur Komponente B führen, unter den dafür geeigneten Reaktionsbedingungen aufpfropft. Der Polymertyp AB ist entsprechend bevorzugt ein Pfropfcopolymer mit einer Polyesterhauptkette und einer Poly(meth)acrylatseitenkette.

Beispielsweise stellt man eine 10 bis 65 gew%ige, vorzugsweise 30 bis 45 gew%ige Lösung eines Itaconsäure haltigen Polyesters in einem geeigneten, unter Polymerisationsbedingungen inerten Lösungsmittel, das im Normalfall einen Siedepunkt oberhalb der Verfahrenstemperatur besitzt, her. Als Lösungsmittel kommen z.B. Essigester wie Ethyl-, Propyl- oder Butylacetat, aliphatische Lösungsmittel wie Isooctan, cycloaliphatische wie Cyclohexan und carbonylische wie Butanon in Frage.

Zu diesen Polyester-Lösungen gibt man die Monomeren, die zum Polymertyp B führen, zu und polymerisiert unter Zusatz eines oder mehrerer, vorzugsweise peroxidischer Radikal-Initiatoren bei Temperaturen von -10 °C bis 100 °C innerhalb von gewöhnlich 4 bis 8 Stunden. Anzustreben ist ein möglichst vollständiger Umsatz. Vorzugsweise finden Azoverbindungen wie AIBN oder Perester wie tert.-Butylperoctoat als Radikalinitiator Verwendung. Die Initiatorkonzentration richtet sich nach der Zahl der gewünschten Pfropfstellen und dem gewünschten Molekulargewicht des Segments B. Im Allgemeinen liegt die Initiatorkonzentration zwischen 0,1 und 3 Gew%, bezogen auf das Polymerisat.

Gegebenenfalls können zur Einstellung des gewünschten Molekulargewichts der Segmente B noch Regler mitverwendet werden. Als Regler eignen sich z. B. Schwefelregler, insbesondere mercaptogruppenhaltige Regler, z.B. die im Kapitel zu Polymertyp B beschriebenen Regler. Die Konzentrationen an Reglern liegen im Allgemeinen bei 0,1 Gew.-%, bis 1,0 Gew.-%, bezogen auf das Gesamtpolymerisat.

Neben der beschriebenen Methode der Lösungspolymerisation kann die Synthese der Pfropfcopolymere des Polymertyps AB auch in Substanz vorgenommen werden. Dazu werden die Polyester vor der Initierung der radikalischen Polymerisation in der (meth)acrylischen Monomermischung gelöst.

Alternativ kann Radikal-Initiator auch in einer Schmelze des Polyesters vorgelegt und anschließend mit der Monomermischung versetzt werden.

### Der Polymertyp CD

### Herstellung der Pfropfpolymerisate CD

Das Pfropfpolymerisat CB wird in der Regel hergestellt, indem man - optional mit Hilfe eines geeigneten Emulgators - eine Dispersion aus der Komponente C herstellt und auf diese Monomere, die zu Polymertyp B bzw. D führen, unter den dafür geeigneten Reaktionsbedingungen aufpfropft. Die Verfahren zur Herstellung geeigneter Emulgatoren vom Typ CB sind an sich bekannt. So kann z. B. nach der Methode der Übertragungspfropfung vorgegangen werden: (Vgl. auch Houben-Weyl, Methoden der Org. Chemie, Bd. 1411, S. 114, H.A.J. Battaerd, G.W. Tregear, Polymer Reviews, Vol. 16, Interscience (1967)).

Beispielsweise stellt man eine 10 bis 50 gew%ige, vorzugsweise 20 bis 40 gew%ige Lösung eines Polyolefins des Polymertyps C in einem geeigneten, unter Polymerisationsbedingungen inerten Lösungsmittel her, das im Normalfall einen Siedepunkt oberhalb der Verfahrenstemperatur besitzt. Als Lösungsmittel kommen z.B. Butylacetat, aliphatische cycloaliphatische und aromatische Kohlenwasserstoffe, sowie Mischungen aus diesen, in Frage. Zu diesen Lösungen gibt man die Monomeren in den gewünschten Verhältnissen und polymerisiert unter Zusatz eines oder mehrerer, vorzugsweise peroxidischer Radikal-Initiatoren bei Temperaturen von 50 °C bis 120 °C innerhalb von gewöhnlich 4 bis 8 Stunden. Anzustreben ist ein möglichst vollständiger Umsatz. Vorzugsweise finden Perester wie tert.-Butylperoctoat Verwendung. Die Initiatorkonzentration richtet sich nach der Zahl der gewünschten Pfropfstellen und dem gewünschten Kettelängen der Segmente D. Im Allgemeinen liegt die Initiatorkonzentration zwischen 0,2 und 3,0 Gew%, bezogen auf das Polymerisat.

Gegebenenfalls können zur Einstellung des gewünschten Molekulargewichts der Segmente B noch Regler mitverwendet werden. Als Regler eignen sich z. B. Schwefelregler, insbesondere mercaptogruppenhaltige Regler, wie sie in dem Kapitel zu Polymertyp B aufgeführt sind. Die Konzentrationen an Reglern liegen im Allgemeinen bei 0,1 bis 1,0 Gew%, bezogen auf das Gesamtpolymerisat. Eine weitere Methode zur Herstellung der Pfropfpolymerisate CB stellt die Hydroperoxidation eines Polyolefins als ersten Schritt dar. Die auf diese Weise gebildeten, kettenständigen Hydroperoxydgruppen können in einer folgenden Stufe die Pfropfpolymerisation der Vinylmonomeren initiieren. (Vgl. H.A.J. Battaerd, G.W. Tregear, Polymer Reviews loc. cit.).

In einer besonderen Ausführung kann Polymertyp B gleichzeitig auf Polymertyp A und Polymertyp D auf Polymertyp C aufgepfropft werden, um die Pfropfcopolymere AB und CD darzustellen. Dabei weisen die Seitenketten B und D die gleiche (statistische) Zusammensetzung auf. Die dabei gebildeten Homopolymere werden erfindungsgemäß als Polymertyp B zusammengefasst.

Die Polymertypen AB und CD können alternativ auch abgemischt werden, wobei die simultane Synthese bevorzugt wird, da somit eine stabilere Dispersion dargestellt wird. Das Problem der Phasentrennung kann gegenüber einer einfachen Abmischung vermindert werden.

In einer dritten Alternative erfolgt die Synthese des Polymertyps AB in Gegenwart des bereits bepfropften Polymertyps CD, des nicht bepfropften Polymertyps C und des bei der Synthese von Polymertyp CD gebildeten Polymertyps B. Bei diesem Vorgehen kann es zu Bildung zusätzlicher Seitenketten an Polymertyp CD und zur Bildung zusätzlicher Polymere CD kommen. Damit ist es sogar möglich, dass Polymertyp CD mit unterschiedlich zusammengesetzten Seitenketten D vorliegt.

Analog und unter analogen Effekten kann auch die Synthese des Polymertyps CD in Gegenwart von den Polymertypen AB, A und B erfolgen.

Die erfindungsgemäße Beschichtungszusammensetzung kann neben den ausgeführten Polymertypen A, B, AB, C und CD auch weitere Komponenten, wie zum Beispiel Haftvermittler, Stabilisatoren, Abriebsverbesserer oder Antioxidantien enthalten. Beispiele für solche Zuschlagsstoffe auf polymerer Basis sind die Polyertypen E und E_{A}.

Zur Verbesserung der Aluminium-Haftung ist eine Formulierung mit Polymertyp E eine Option: Durch eine Grundierung der Folie oder durch Zugabe von 0,1 bis 10 Gew%, besser von 0,1 bis 5 Gew% eines haftverbessernden Terpolymers in die Lackformulierung kann eine Verbesserung der Al-Haftung beobachtet werden. Eingesetzt wird z.B. VINYLITE ^{®} VMCH (Vertrieb durch Union Carbide).

Polymertyp E_{A} kann optional zur Verminderung eines möglichen Abriebes in der Verarbeitung zugesetzt werden. Eingesetzt werden kann beispielsweise ein Polyamid, z.B. des Typs VESTOSIND ^{®} 2159 (Fa. Evonik Ind. AG). Dieser kann in einem Formulierungsanteil zwischen 0,1 und 10 Gew%, besser zwischen 0,1 und 5 Gew% zugegeben werden.

### Das Lösungsmittelsystem

Neben den Polymertypen A, B und C, den Pfropfpolymeren AB und CD und gegebenenfalls dem Polymertyp E oder E_{A}, sowie weiteren optionalen Zuschlagsstoffen, befindet sich noch ein Lösungsmittelsystem L in der erfindungsgemäßen Beschichtungszusammensetzung.

Die für das Lösungsmittelsystem L zu verwendenden Lösungsmittel sind so auszuwählen, dass sie den Erfordernissen der Beschichtungstechnologie für Kunststoffe und Metalle entsprechen. Die - gegebenenfalls im Gemisch - anzuwendenden Lösungsmittel sollen inert und im Ganzen unbedenklich sein, wobei der Siedepunkt 105 °C bei 760 Torr möglichst nicht überschreitet.

Als Lösungsmittel kommt beispielsweise ein Gemisch aus Estern aliphatischer Carbonsäuren mit aliphatischen Alkoholen, Ketonen und aliphatischen Kohlenwasserstoffen in Frage. Beispiele für aliphatische Carbonsäuren sind Essigsäure oder Propinsäure. Als aliphatische Alkohole kommen Ethanol, Propanol, Isopropanol, n-Butanol, 2-Butanol, 2-Methyl-1-propanol oder 2-Methyl-2-propanol in Frage. Geeignete Beispiele für Ketone sind z.B. Aceton oder Ethylmethylketon. Als aliphatische Kohlenwasserstoffe dienen insbesondere Pentan, Hexan, Heptan, Oktan, iso-Octan, Nonan, Decan, Undecan und Dodecan als Beispiele. Die aliphatischen Kohlenwasserstoffe können auch in Form ihrer Isomerengemische und in Gemischen untereinander vorliegen. Es können auch Cycloalkane und substituierte Cycloalkane eingesetzt werden.

Auch Gemische aus den vorstehend beschriebenen Lösungsmitteln kommen für das Trägersystem infrage. Der Anteil des Lösungsmittelsystems an den erfindungsgemäß konzentrierten Polymerisatdispersionen kann z. B. 75 Gew%, in besonders günstigem Fall bis herab zu 30 Gew% betragen, vorzugsweise unter 67 Gew%, praktisch meist 55 Gew% bis 40 Gew%.

Dem heißsiegelfähigen, zur Versiegelung verschiedenartiger Untergründe geeigneten Beschichtungssystem können darüber hinaus, wie beschrieben, die für das Heißsiegeln üblichen Hilfs- und Zusatzstoffe zugefügt werden.

Neben der beschriebenen Beschichtungszusammensetzung ist zugleich auch ein Verfahren zur Versiegelung von zwei Materialien mit Hilfe der erfindungsgemäßen Beschichtungszusammensetzung Bestandteil der vorliegenden Erfindung.

Insbesondere zeichnet sich dieses Verfahren zur Versiegelung von Polyesterfolien bzw. PET-beschichteten Folie gegen Polystyrol, Polyester und Polyvinylchlorid dadurch aus, dass die Folie mit der erfindungsgemäßen Beschichtungssystem beschichtet, die Beschichtung getrocknet, die beschichtete Seite der Folie auf das zu versiegelnde Material aus Polystyrol, Polyester oder PVC aufgelegt und bei einer Temperatur zwischen 160 und 220 °C und einem Druck zwischen 2 und 6 mPas über einen Zeitraum zwischen 0,1 und 1 s versiegelt wird.

Die Trocknung kann dabei im Unterdruck, bevorzugt bei einer Temperatur oberhalb der höchsten Siedetemperatur der Komponenten des Lösungsmittelsystems erfolgen.

### Herstellung des Heißsiegelsystems

### Synthese mit den Polymertypen A - D

Alternative A:
Mit Hilfe eines geeigneten Emulgators wird, wie vorstehend erläutert, eine Dispersion oder bei geeigneter Abstimmung der Polymerverträglichkeit eine homogene Lösung der Komponenten A und C im Lösungsmittelsystem L hergestellt und unter geeigneten Reaktionsbedingungen Monomere des Typs I-V, die zur Komponente B führen, gleichzeitig auf die Komponenten A und C gepfropft. Im Allgemeinen stehen die Anteile von A und B in Gewichtsverhältnissen von 1 zu 5 bis 5 zu 1. Das Gewichtsverhältnis von A zu C liegt in der Regel zwischen 1 zu 2 und 10 zu 1, bevorzugt zwischen 1 zu1 und 5 zu 1.

Der Gehalt des gesamten Polymerisats, bezogen auf die gesamte Dispersion beträgt mindestens 10 Gew.-%, wobei in der Praxis 40 Gew.-% bis 80 Gew.-% angestrebt werden, im Normalfall 45 Gew.-% bis 60 Gew.-%.

Nach dem erfindungsgemäßen Verfahren werden heißsiegelfähige Beschichtungsmassen in Dispersion erhalten, die eine ausreichende Stabilität für den Verarbeitungsprozess besitzen. Die Stabilität der Dispersionen beträgt mindestens mehrere Tage, im Normalfall mehrere Wochen bis Monate.

Damit ergeben sich viele Einsatzgebiete für die erfindungsgemäßen Beschichtungssysteme. Hervorzuheben sind die Verwendungen von Beschichtungssystemen nach Anspruch 1, die Polyesterfolien bzw. PET-beschichtete Folien gegen Polystyrol, Polyester und Polyvinylchlorid heißsiegeln können. Beschichtungssysteme gemäß der Ansprüche 4 und 13 finden Verwendung beim Heißsiegeln von Polyesterfolie aber auch Aluminiumfolie bzw. sowohl Aluminium- als auch PET-beschichteten Folien gegen Polystyrol, Polyester und Polyvinylchlorid. Die Beschichtungssysteme nach Anspruch 2, 11 und 15 finden Anwendung beim Heißsiegeln von Polyesterfolie aber auch Aluminiumfolie bzw. sowohl Aluminium- als auch PET-beschichteten Folien gegen Polystyrol, Polyester und Polyvinylchlorid.

Die im Folgenden gegebenen Beispiele werden zur besseren Veranschaulichung der vorliegenden Erfindung gegeben, sind jedoch nicht dazu geeignet, die Erfindung auf die hierin offenbarten Merkmale zu beschränken.

### Materialien:

Verwendetes Folien- und Bechermaterial:
Papier/Aluminium/Polyesterfolienverbund-Folie (z.B. Flexpap, Fa. Constantia) PET-Folie, 36µm dick, unbehandelt, transparent
Verwendetes Bechermaterial: Polystyrol-Tiefziehfolien der Fa. Fernholz, APET-Bechermaterialfolien (Bezug über Fa. Derschlag)

### Komponente A:

In Tabelle 1 sind die Charakteristika der hier als Beispiele für die Komponente A verwendete Copolyester (Typ A1 und A2) aufgeführt. Es handelt sich dabei um teilaromatische, lineare Copolyester mit unterschiedlichen Itaconsäuregehalten, bezogen auf die Gesamtmenge an Polycarbonsäuren.

**Tabelle 1: Charakteristika der verwendeten Polyester**

| Polyester | Itaconsäuregehalt | T_{g} | M_{w} |
|---|---|---|---|
| Typ A1 | 3,0 Mol-% | 33 °C | 15.800 |
| Typ A2 | 0 Mol-% | 30 °C | 40.900 |

Als Polyester vom Typ 1 kann z.B. DYNACOLL EP 415.02 (Fa. Evonik) eingesetzt werden.

Als Polyester vom Typ 2 kann z.B. DYNAPOL L 323 (Fa. Evonik) eingesetzt werden.

### Komponente C:

**Tabelle 2: Charakteristika der verwendeten Polyolefine**

| Name | Charakteristik | MFR [dg/min] | Mooney Viscosity ML (1+4) [MU] | Tg [°C] |
|---|---|---|---|---|
| Dutral CO 043 | Ethylen-Propen | - | 33** | - |
| Engage 7447 | Ethylen-Buten | 5* | - | -53¹⁾ |
| Engage 8407 | Ethylen-Octen | 30* | - | -54¹⁾ |
| Keltan EPG 5170 | EPDM | - | 59*** | - |

| | | | | |
|---|---|---|---|---|
| MFR = Melt Flow Rate: *190°C, 2,16kg; Mooney Viscosity: **100°C, ***125°C 1) DSC-measurement, DOW method, 2) EPDM = Ethylen-Propylen-Dien-Kautschuke | | | | |

Dutral kann von der Fa. Polimeri, Engage von der Fa. DOW und Keltan von der Fa. Lanxess bezogen werden.

Die Bestimmung des Feststoffgehalts (FG) erfolgt im Trockenschrank, 1h bei 105°C.

Die Bestimmung der dynamischen Viskosität erfolgt mit dem Brookfield-Viskosimeter Typ LVDV-II+Pro bei 23°C mit der Spindel II bei 6rpm.

### Auftrag der Heißsiegellösung im Labor

Die Heißsiegellösung wurde nach Verdünnen auf Applikationsviskosität mit dem K-Handcoater Nr. 3 aufgezogen. Dabei wurden Trockenschichtdicken von 4 bis 7 µm erhalten.

### Trocknung der beschichteten Folien im Labor

Papier-Alu-PET-Verbundfolie: Nach kurzer Ablüftzeit (5 - 10 Minuten) wurden die Folien 15 Sekunden zwischen 120°C und 200°C im Umluftofen getrocknet.

Heißversiegelung und Ermittlung der Siegelnahtfestigkeit

Die Versiegelungen wurden mit dem Heißsiegelgerät (HSG/ET) der Fa. Brugger durchgeführt.

### Siegelbedingungen:

| | |
|---|---|
| Temperatur: | 180°C |
| Druck: | 3 bar |
| Zeit: | 0,5 sec. |
| Siegelfläche: | 100 x 10 mm |

Zur Ermittlung der Siegelnahtfestigkeit wurden Proben in 15 mm breite Streifen geschnitten und mit der Zugprüfmaschine von Instron, Modell Nr. 1195 oder Zwick, Modell Nr. 1454 bei einer Geschwindigkeit von 100 mm/min. gezogen. Es wurde darauf geachtet, dass während des Abzugsversuches die bereits voneinander getrennten Folienteile mit dem noch unbeanspruchten Rest einen Winkel von 90 °C bilden.

Zur Ermittlung der Trübung wird die transparente PET36-Folie mit den Bindemitteln wie oben beschrieben beschichtet und anschließend am "haze-gard plus" von BYK Gardner nach ASTM D 1003 vermessen.

### Herstellung der Heißsiegelbindemittel

### Beispiel 1

In einem Doppelmantelgefäß mit angeschlossenem Thermostaten, Rückflusskühler, Blattrührer und Innenthermometer werden 65,0 g Dutral CO 043, 26,0 g Polyester vom Typ A1 und 104,0 g Polyester vom Typ A2 sowie 120,0 g eines geeigneten Emulgators in 335 g Propylacetat sowie 60,0 g Cyclohexan (CH) vorgelegt und bei 95 °C bis zum Lösen gerührt. Anschließend wird eine Mischung aus 64,9 g Methylmethacrylat und 64,9 g Butylmethacrylat, versetzt mit 2,60 g *t-*Butyl-peroxy-2-ethylhexanoat und über einen Zeitraum von 1,5 h bei 95°C mittels Dosierpumpe zudosiert. Nach beendeter Zugabe werden zweimal, in einem Abstand von einer Stunde, jeweils weitere 0,26 g *t*-Butyl-peroxy-2-ethylhexanoat zugegeben und das Gemisch noch weitere 2 h gerührt.

### Beispiel 2

In einem Doppelmantelgefäß mit angeschlossenem Thermostaten, Rückflusskühler, Blattrührer und Innenthermometer werden 86,0 g Engage 7447, 32,3 g Polyester vom Typ A1 und 97,8 g Polyester vom Typ A2 sowie 80,0 g eines geeigneten Emulgators in 336 g Propylacetat sowie 18,7 g Cyclohexan (CH) vorgelegt und bei 95 °C bis zum Lösen gerührt. Anschließend wird eine Mischung aus 64,5 g Methylmethacrylat und 64,5 g Butylmethacrylat, versetzt mit 2,58 g *t-*Butyl-peroxy-2-ethylhexanoat und über einen Zeitraum von 1,5 h bei 95°C mittels Dosierpumpe zudosiert. Nach beendeter Zugabe wird das Reaktionsgemisch noch 5 h bei 95 °C gerührt und abschließend mit 8,7 g CH und 18,7 g Methylethylketon (MEK) zur Einstellung der Viskosität verdünnt.

### Beispiel 3

Zur Herstellung des Beispiels 3 wird genauso verfahren wie in Beispiel 2. Anstelle von Engage 7447 verwendet man 86,0 g Engage 8407.

### Beispiel 4

In einem Doppelmantelgefäß mit angeschlossenem Thermostaten, Rückflusskühler, Blattrührer und Innenthermometer werden 68,8 g Dutral CO 043, 34,4 g Polyester vom Typ A1 und 103,2 g Polyester vom Typ A2 sowie 80,0 g eines geeigneten Emulgators in 335 g Propylacetat sowie 37,3 g Cyclohexan (CH) vorgelegt und bei 95 °C bis zum Lösen gerührt. Anschließend wird eine Mischung aus 64,9 g Methylmethacrylat und 64,9 g Butylmethacrylat, versetzt mit 2,60 g *t-*Butyl-peroxy-2-ethylhexanoat und 0,28 g des Reglers DYNASILAN MTMO (Fa. Evonik Industries AG) über einen Zeitraum von 1,5 h bei 95°C mittels Dosierpumpe zudosiert. Nach beendeter Zugabe werden zweimal, in einem Abstand von einer Stunde, jeweils weitere 0,26 g *t*-Butyl-peroxy-2-ethylhexanoat zugegeben und das Gemisch noch weitere 2 h gerührt.

### Beispiel 5

In einem Doppelmantelgefäß mit angeschlossenem Thermostaten, Rückflusskühler, Blattrührer und Innenthermometer werden 86,0 g Dutral CO 043, 32,3 g Polyester vom Typ A1 und 96,8 g Polyester vom Typ A2 sowie 80,0 g eines geeigneten Emulgators in 313 g Propylacetat sowie 60,0 g Cyclohexan (CH) vorgelegt und bei 95 °C bis zum Lösen gerührt. Anschließend wird eine Mischung aus 64,5 g Methylmethacrylat und 64,5 g Butylmethacrylat, versetzt mit 2,60 g *t-*Butyl-peroxy-2-ethylhexanoat, über einen Zeitraum von 1,5 h bei 95°C mittels Dosierpumpe zudosiert. Nach beendeter Zugabe werden zweimal, in einem Abstand von einer Stunde, jeweils weitere 0,26 g *t*-Butyl-peroxy-2-ethylhexanoat zugegeben und das Gemisch noch weitere 2 h gerührt.

### Vergleichsbeispiel 1 (VB1)

In einem Doppelmantelgefäß mit angeschlossenem Thermostaten, Rückflusskühler, Blattrührer und Innenthermometer werden 42,9 g eines EPDM und 20,0 g eines Itaconsäure-haltigen Polyesters des Typs 1 in einer Mischung aus 50,0 g Propylacetat, 20,0 g Ethylacetat und 10,0 g iso-Octan bei 90 °C dispergiert. Zu dieser Mischung werden erst 2,0 g *t*-Butylperbenzoat gegeben und anschließend eine Mischung aus 18,5 g n-Butylmethacrylat und 18,5 g Methylmethacrylat über einen Zeitraum von 90 min zudosiert. Anschließend wird über einen Zeitraum von 120 min bei 90 °C polymerisiert. Abschließend werden weitere 0,5 g *t*-Butyl-peroxy-2-ethylhexanoat zur Nachinitiierung zugegeben und für weitere 90 min bei 90 °C gerührt.

### Vergleichsbeispiel 2 (VB2)

In einem Doppelmantelgefäß mit angeschlossenem Thermostaten, Rückflusskühler, Blattrührer und Innenthermometer werden 35,2 g Propylacetat und 30 g Polyester des Typs A1 vorgelegt. Unter Rühren wird der Polyester bei 95 °C vollständig aufgelöst und anschließend 0,06 g t-Butyl-per-2-ethylhexanoat versetzt. Um eine optimale Ausbeute freier Radikale entlang der Polyesterketten zu bilden, wird diese Lösung über einen Zeitraum von 30 min bei 90 °C gerührt, bevor mittels einer Dosierpumpe eine Mischung aus 9,50 g Methylmethacrylat, 9,50 g Butylmethacrylat, 1,00 g Butylacrylat und 0,15 g t-Butyl-per-2-ethylhexanoat in 2 h zudosiert wird. Anschließend wird zur Verringerung des Restmonomergehaltes mit 0,15 g t-Butyl-per-2-ethylhexanoat weitere 4 h bei 90°C gerührt. Zum Einstellen der Lösungsviskosität wird das Gemisch mit 31,3 g Propylacetat verdünnt.

Nach insgesamt 150 min Reaktionszeit wird die Polymerlösung abgekühlt und zur Verringerung der Lösungsviskosität mit 13,5 g Propylacetat verdünnt.

### Vergleichsbeispiel 3 (VB3)

In einem Doppelmantelgefäß mit angeschlossenem Thermostaten, Rückflusskühler, Blattrührer und Innenthermometer werden 66,9 g Propylacetat und 30 g Polyester des Typs A1 vorgelegt. Unter Rühren wird der Polyester bei 95 °C vollständig aufgelöst und anschließend 0,06 g t-Butyl-per-2-ethylhexanoat versetzt. Um eine optimale Ausbeute freier Radikale entlang der Polyesterketten zu bilden, wird diese Lösung über einen Zeitraum von 30 min bei 90 °C gerührt, bevor mittels einer Dosierpumpe eine Mischung aus 17,50 g Methylmethacrylat, 17,50 g Butylmethacrylat, 1,00 g Butylacrylat und 0,15 g t-Butyl-per-2-ethylhexanoat in 2 h zudosiert wird. Anschließend wird zur Verringerung des Restmonomergehalts mit 0,15 g t-Butyl-per-2-ethylhexanoat weitere 4 h bei 90°C gerührt.

### Ergebnisse der Versuche

**Tabelle 3: Eigenschaften der Bindemittel**

| **Beispiel** | **dyn. Visk. [mPas]** | **FG [%]** | **Aussehen** |
|---|---|---|---|
| **1** | 2.900 | 47,5 | weiß, dispers |
| **2** | 2.000 | 47,3 | weiß, dispers |
| **3** | 2.000 | 47,1 | weiß, dispers |
| **4** | 3.300 | 47,0 | weiß, dispers |
| **5** | 3.100 | 47,8 | weiß, dispers |
| **VB1** | 2.800 | 47,2 | weiß, dispers |
| **VB2** | 3.900 | 54,1 | weiß, dispers |
| **VB3** | 2.000 | 44,9 | weiß, dispers |

Alle hergestellten Beispiele und Vergleichsbeispiele weisen Feststoff-Viskositätsverhältnisse auf, die auf der einen Seite die Verarbeitbarkeit bei Anwendern sicherstellen und auf der anderen Seite den Anspruch erfüllen, möglichst hohe Feststoffgehalte zu realisieren.

### Heißsiegeleigenschaften

**Tabelle 4: Heißsiegelnahtfestigkeiten der erfindungsgemäßen Beispiele, gesiegelt gegen PS-Bechermaterial**

| | **Beispiel** | **1** | **2** | **3** | **4** | **5** | **5** |
|---|---|---|---|---|---|---|---|
| **Folie** | | | | | | | 48h Wasserlag. |
| **Mixpap** | HSF [N/15mm] | 5,9 | 8,6 | 7,7 | 4,4 | 6,6 | 6,6 |
| | Siegelbild | rel. gleichm. | ruppig | ruppig | gleichm. | gleichm. | gleichm. |
| **AluPET** | HSF [N/15mm] | - | 8,2 | 8,2 | 4,6 | 7,2 | 7,5 |
| | Siegelbild | | rel. gleichm. | rel. gleichm. | rel. gleichm. | gleichm. | rel. gleichm. |
| **PET36** | HSF [N/15mm] | - | 4,1 | 5,4 | 3,0 | 5,3 | 5,5 |
| | Siegelbild | | ruppig | ruppig | rel. gleichm. | gleichm. | rel. gleichm. |
| **Alu** | HSF [N/15mm] | 6,0 | 10,6 | 10,6 | 7,5 | 7,1 | 7,7 |
| | Siegelbild | rel. gleichm. | ruppig | gleichm. | gleichm. | gleichm. | rel. gleichm. |

| | | | | | | | |
|---|---|---|---|---|---|---|---|
| HSF: Heißsiegelfestigkeit, rel. gleichm.: relativ gleichmäßiges Abzugsbild, gleichm.: gleichmäßiges Abzugsbild (smotth peel) | | | | | | | |

**Tabelle 5: Heißsiegelnahtfestigkeiten der Vergleichsbeispiele, gesiegelt gegen PS-Bechermaterial**

| | **Beispiel** | **VB1** | **VB2** | **VB3** |
|---|---|---|---|---|
| **Folie** | | | | |
| **Mixpap** | HSF [N/15mm] | 8,0 | <1 | 1,1 |
| | Siegel bild | ruppig | - | ruppig |
| **AluPET** | HSF [N/15mm] | 7,6 | nb. | nb. |
| | Siegel bild | ruppig | - | - |
| **PET36** | HSF [N/15mm] | 4,8 | nb. | nb. |
| | Siegel bild | ruppig | - | - |
| **Alu** | HSF [N/15mm] | 9,6 | nb. | nb. |
| | Siegel bild | ruppig | - | - |

| | | | | |
|---|---|---|---|---|
| nb.: nicht bestimmt, da auf Mixpap-Folie keine ausreichende HSF vorhanden ist | | | | |

**Tabelle 6: Heißsiegelnahtfestigkeiten des erfindungsgemäßen Beispiels 5, gesiegelt gegen APET-Bechermaterial**

| **Folie** | **Mixpap** | **AluPET** | **PET36** | **Alu** |
|---|---|---|---|---|
| **HSF [N/15mm]** | 7,0 | 8,1 | 5,1 | 7,8 |

**Tabelle 7: Vergleich der Trübung der beschichteten Folien**

| Beispiel | Schichtdicke [µm] | Haze [%] |
|---|---|---|
| PET36-Folie | 36 | 3,9 |
| 1 | 4-5 | 17 |
| 2 | 4-5 | 25 |
| 3 | 4-5 | 18 |
| 4 | n.b | n.b. |
| 5 | 4-5 | 23 |
| VB1 | 4 | 60 |

## Patentansprüche

1. Heißsiegelfähiges, zur Versiegelung verschiedenartiger Untergründe geeignetes Beschichtungssystem, enthaltend eine filmbildende Dispersion, **dadurch gekennzeichnet, dass** diese Dispersion
zwischen 10 Gew% und 60 Gew% eines Polyesters oder ein Polyestergemischs als Polymertyp A,
zwischen 10 Gew% und 60 Gew% eines Poly(meth)acrylats als Polymertyp B, zwischen 1 Gew% und 20 Gew% eines Pfropfcopolymers aus Polymertyp A und Polymertyp B als Polymertyp AB,
zwischen 1 Gew% und 30 Gew% eines Polyolefins als Polymertyp C und zwischen 1 und 35 Gew% eines Pforpfcopolymers als Polymertyp CD, bestehend aus Polymertyp C und einem Poly(meth)acrylat als Polymertyp D, jeweils bezogen auf die Gesamtmasse der Polymertypen A, B, C, AB und CD, enthält,
dass der Anteil des Polymertyps C, einschließlich der Anteile in Polymertyp CD, an dieser Gesamtmasse zwischen 5 und 40 Gew% beträgt, dass es sich bei 10% bis 40% der Kohlenstoffe der Hauptkette des Polymertyps C um tertiäre Kohlenstoffatome handelt, dass Komponente C einen Anteil an Ethylen-Wiederholungseinheiten zwischen 20 und 70 Gew% ein gewichtsmittleres Molekulargewicht M_{w} zwischen 10 000 und 250 000 aufweist,
und dass der Feststoffgehalt der Dispersion zwischen 25 und 70 Gew% beträgt.

2. Beschichtungssystem gemäß Anspruch 1, **dadurch gekennzeichnet, dass** es sich bei dem Polymertyp A um eine Mischung aus einem Polyester A1 mit einem zahlenmittleren Molekulargewicht Mₙ zwischen 700 und 5000 g/mol, der unter Coppolykondensation von Itaconsäure hergestellt wurde, und einem Polyester A2 mit einem zahlenmittleren Molekulargewicht Mₙ zwischen 5000 und 50000 g/mol, der keine Dopplebindungen aufweist, handelt, wobei der Polymertyp AB ausschließlich Polyester A1 als Polymertyp A enthält und wobei das zahlenmittlere Molekulargewicht Mₙ mittels der in der Beschreibung genannten Methode bestimmt wird.

3. Beschichtungssystem gemäß Anspruch 2, **dadurch gekennzeichnet, dass** Polyester A1 ein zahlenmittleres Molekulargewicht Mₙ zwischen 2000 und 4000 g/mol aufweist, dass Polyester A2 ein zahlenmittleres Molekulargewicht Mₙ zwischen 10000 und 35000 g/mol aufweist, und dass das Beschichtungssystem bezogen auf die Gesamtmasse der Polymertypen A, B, C, AB und CD, einschließlich der Anteile des Polyesters A1 in Polymertyp AB, zwischen 1 Gew% und 15 Gew% des Polyesters A1 und zwischen 10 Gew% und 50 Gew% des Polyesters A2 enthält und wobei das zahlenmittlere Molekulargewicht Mₙ mittels der in der Beschreibung genannten Methode bestimmt wird.

4. Beschichtungssystem gemäß Anspruch 1, **dadurch gekennzeichnet, dass** es sich bei Polymertyp A ganz oder teilweise um einen Polyester handelt, der unter Coppolykondensation von Itaconsäure hergestellt wurde.

5. Beschichtungssystem gemäß mindestens einem der Ansprüche 2 bis 4, **dadurch gekennzeichnet, dass** es sich bei dem Itaconsäure aufweisenden Polymertyp A bzw. A1 um einen Polyester handelt, dessen Anteil an Itaconsäure bezogen auf die Gesamtmenge an eingesetzten Polycarbonsäuren zwischen 0,1 Mol% und 20 Mol% beträgt.

6. Beschichtungssystem gemäß mindestens einem der Ansprüche 2 bis 5, **dadurch gekennzeichnet, dass** es sich bei Polymertyp A bzw. A1 um einen Polyester handelt, dessen Anteil an Itaconsäure bezogen auf die Gesamtmenge an eingesetzten Polycarbonsäuren zwischen 2 Mol% und 8 Mol% beträgt.

7. Beschichtungssystem gemäß mindestens einem der Ansprüche 1 bis 6, **dadurch gekennzeichnet, dass** es sich bei dem Polymertyp AB um ein Pfropfcopolymer mit einer Polyesterhauptkette und Poly(meth)acrylatseitenketten handelt.

8. Beschichtungssystem gemäß mindestens einem der Ansprüche 1 bis 7, **dadurch gekennzeichnet, dass** es sich bei der Komponente C um ein EPM, ein hydriertes Polybutadien oder um ein Copolymer aus Etyhlen, und einem α-Olefin mit 4 bis 12 Kohlenstoffatomen handelt.

9. Beschichtungssystem gemäß mindestens einem der Ansprüche 1 bis 8, **dadurch gekennzeichnet, dass** gleichzeitig Polymertyp B auf Polymertyp A und Polymertyp D auf Polymertyp C aufgepfropft werden, um die Pfropfcopolymere AB und CD darzustellen, und dass Polymertyp B und Polymertyp D die gleiche Zusammensetzung aufweisen.

10. Verfahren zur Versiegelung von Polyesterfolien bzw. PET-beschichteten Folie gegen Polystyrol, Polyester und Polyvinylchlorid, **dadurch gekennzeichnet, dass** die Folie mit einem Beschichtungssystemen gemäß einem der Ansprüche 1 bis 9 beschichtet wird, die Beschichtung getrocknet wird, die beschichtete Seite der Folie auf das zu versiegelnde Material aus Polystyrol, Polyester oder PVC aufgelegt wird und bei einer Temperatur zwischen 160 und 220 °C und einem Druck zwischen 2 und 6 mPas über einen Zeitraum zwischen 0,1 und 1 s versiegelt wird.

## Claims

1. Heat-sealable coating system suitable for the sealing of various types of substrates, comprising a film-forming dispersion, **characterized in that** said dispersion comprises
between 10% and 60% by weight of a polyester or polyester mixture as polymer type A,
between 10% and 60% by weight of a poly (meth) acrylate as polymer type B,
between 1% and 20% by weight of a graft copolymer of polymer type A and polymer type B as polymer type AB, between 1% and 30% by weight of a polyolefin as polymer type C, and
between 1 and 35% by weight of a graft copolymer as polymer type CD, composed of polymer type C and of a poly(meth)acrylate as polymer type D,
based in each case on the total mass of the polymer types A, B, C, AB, and CD,
that the proportion of the polymer type C, inclusive of the proportions in polymer type CD, based on said total mass, is between 5 and 40% by weight, that from 10% to 40% of the carbons of the main chain of the polymer type C are tertiary carbon atoms, that component C comprises a proportion of between 20 and 70% by weight of repeating ethylene units, and its weight-average molecular weight M_{w} is between 10 000 and 250 000,
and that the solids content of the dispersion is between 25 and 70% by weight.

2. Coating system according to Claim 1, **characterized in that** the polymer type A is a mixture of a polyester A1 with number-average molar mass Mₙ between 700 and 5000 g/mol, produced with copolycondensation of itaconic acid, and of a polyester A2 with number-average molar mass Mₙ between 5000 and 50 000 g/mol which has no double bonds, where the polymer type AB exclusively comprises polyester A1 as polymer type A, and where the number-average molar mass Mₙ is determined by the method specified in the description.

3. Coating system according to Claim 2, **characterized in that** the number-average molar mass Mₙ of polyester A1 is between 2000 and 4000 g/mol and the number-average molar mass Mₙ of polyester A2 is between 10 000 and 35 000 g/mol, and that the coating system comprises, based on the total mass of the polymer types A, B, C, AB, and CD, inclusive of the proportions of the polyester A1 in polymer type AB, between 1% by weight and 15% by weight of the polyester A1 and between 10% by weight and 50% by weight of the polyester A2, and where the number-average molar mass Mₙ is determined by the method specified in the description.

4. Coating system according to Claim 1, **characterized in that** polymer type A is entirely or to some extent a polyester produced with copolycondensation of itaconic acid.

5. Coating system according to at least one of Claims 2 to 4, **characterized in that** the polymer type A or A1 comprising itaconic acid is a polyester whose proportion of itaconic acid, based on the total quantity of polycarboxylic acids used, is between 0.1 mol% and 20 mol%.

6. Coating system according to at least one of Claims 2 to 5, **characterized in that** polymer type A or A1 is a polyester whose proportion of itaconic acid, based on the total quantity of polycarboxylic acids used, is between 2 mol% and 8 mol%.

7. Coating system according to at least one of Claims 1 to 6, **characterized in that** the polymer type AB is a graft copolymer with a polyester main chain and poly(meth)acrylate side chains.

8. Coating system according to at least one of Claims 1 to 7, **characterized in that** component C is an EPM, a hydrogenated polybutadiene, or a copolymer of ethylene and of an α-olefin having from 4 to 12 carbon atoms.

9. Coating system according to at least one of Claims 1 to 8, **characterized in that**, in order to produce the graft copolymers AB and CD, grafting of polymer type B onto polymer type A and of polymer type D onto polymer type C is carried out simultaneously, and that polymer type B and polymer type D have the same composition.

10. Process for the sealing of polyester foils or PET-coated foil with respect to polystyrene, polyester, and polyvinyl chloride, **characterized in that** the foil is coated with a coating system according to any of Claims 1 to 9, the coating is dried, and the coated side of the foil is placed onto the material to be sealed, made with polystyrene, polyester, or PVC, and is sealed at a temperature between 160 and 220°C and with a pressure between 2 and 6 mPas over a period of between 0.1 and 1 s.

## Revendications

1. Système de revêtement thermoscellable, approprié au scellement de supports de différents types, contenant une dispersion filmogène, **caractérisé en ce que** cette dispersion contient
entre 10 % en poids et 60 % en poids d'un polyester ou d'un mélange de polyesters en tant que type de polymère A,
entre 10 % en poids et 60 % en poids d'un poly(méth)acrylate en tant que type de polymère B, entre 1 % en poids et 20 % en poids d'un copolymère greffé composé du type de polymère A et du type de polymère B en tant que type de polymère AB,
entre 1 % en poids et 30 % en poids d'une polyoléfine en tant que type de polymère C et
entre 1 et 35 % en poids d'un copolymère greffé en tant que type de polymère CD,
constitué d'un polymère C et d'un poly(méth)acrylate en tant que type de polymère D, à chaque fois par rapport à la masse totale des types de polymère A, B, C, AB et CD,
**en ce que** la proportion du type de polymère C, y compris les parties dans le type de polymère CD, par rapport à cette masse totale est comprise entre 5 et 40 % en poids, **en ce que** 10 % à 40 % des carbones de la chaîne principale du type de polymère C sont des atomes de carbone tertiaires, **en ce que** le composant C présente une proportion de motifs répétitifs d'éthylène compris entre 20 et 70 % en poids et un poids moléculaire moyen en poids M_{w} compris entre 10 000 et 250 000,
et **en ce que** la teneur en solides de la dispersion est comprise entre 25 et 70 % en poids.

2. Système de revêtement selon la revendication 1, **caractérisé en ce que** le type de polymère A est un mélange d'un polyester A1 doté d'un poids moléculaire moyen en nombre Mₙ compris entre 700 et 5 000 g/mole, qui a été préparé par copolycondensation d'acide itaconique, et d'un polyester A2 doté d'un poids moléculaire moyen en nombre Mₙ compris entre 5 000 et 50 000 g/mole, qui ne présente aucune double liaison,
le type de polymère AB contenant exclusivement le polyester A1 en tant que type de polymère A et le poids moléculaire moyen en nombre Mₙ étant déterminé au moyen de la méthode mentionnée dans la description.

3. Système de revêtement selon la revendication 2, **caractérisé en ce que** le polyester A1 présente un poids moléculaire moyen en nombre Mₙ compris entre 2 000 et 4 000 g/mole, **en ce que** le polyester A2 présente un poids moléculaire moyen en nombre Mₙ compris entre 10 000 et 35 000 g/mole, et **en ce que** le système de revêtement contient, par rapport à la masse totale des types de polymère A, B, C, AB et CD, y compris les proportions du polyester A1 dans le type de polymère AB, entre 1 % en poids et 15 % en poids du polyester A1 et entre 10 % en poids et 50 % en poids du polyester A2 et le poids moléculaire moyen en nombre Mₙ étant déterminé au moyen de la méthode mentionnée dans la description.

4. Système de revêtement selon la revendication 1, **caractérisé en ce que** le type de polymère A est totalement ou partiellement un polyester qui a été préparé par copolycondensation d'acide itaconique.

5. Système de revêtement selon au moins l'une des revendications 2 à 4, **caractérisé en ce que** le type de polymère A respectivement A1 présentant de l'acide itaconique est un polyester dont la proportion d'acide itaconique par rapport à la quantité totale des poly(acides carboxyliques) utilisés est comprise entre 0,1 % en moles et 20 % en moles.

6. Système de revêtement selon au moins l'une des revendications 2 à 5, **caractérisé en ce que** le type de polymère A respectivement A1 est un polyester dont la proportion d'acide itaconique par rapport à la quantité totale des poly(acides carboxyliques) utilisés est comprise entre 2 % en moles et 8 % en moles.

7. Système de revêtement selon au moins l'une des revendications 1 à 6, **caractérisé en ce que** le type de polymère AB est un copolymère greffé doté d'une chaîne principale de polyester et de chaînes latérales de poly(méth)acrylate.

8. Système de revêtement selon au moins l'une des revendications 1 à 7, **caractérisé en ce que** le composant C est un EPM, un polybutadiène hydrogéné ou un copolymère d'éthylène et d'une α-oléfine comportant 4 à 12 atomes de carbone.

9. Système de revêtement selon au moins l'une des revendications 1 à 8, **caractérisé en ce que** simultanément le type de polymère B est greffé sur le type de polymère A et le type de polymère D est greffé sur le type de polymère C, afin de constituer les copolymères greffés AB et CD, et **en ce que** le type de polymère B et le type de polymère D présentent la même composition.

10. Procédé pour le scellement de feuilles de polyester respectivement de feuilles revêtues par un PET sur un polystyrène, un polyester et un poly(chlorure de vinyle), **caractérisé en ce que** la feuille est revêtue par un système de revêtement selon l'une quelconque des revendications 1 à 9, le revêtement est séché, le côté revêtu de la feuille est posé sur le matériau de polystyrène, de polyester ou de PVC à sceller et est scellé à une température comprise entre 160 et 220 °C et à une pression comprise entre 2 et 6 mPas sur une durée comprise entre 0,1 et 1 s.
